# EUROPÄISCHE PATENTSCHRIFT

(11) **EP 0 697 308 B1**
(45) Veröffentlichungstag und Bekanntmachung des Hinweises auf die Patenterteilung: **28.05.1997**
(21) Anmeldenummer: 95110394.4
(22) Anmeldetag: 04.07.1995
(51) Int. Cl.: B60N 3/10

(54) **Vorrichtung zum Halten von zwei Getränkebehältnissen in der Mittelkonsole eines Kraftfahrzeuges**
Device for holding two drink containers in the centre console of a motor vehicle
Dispositif pour tenir deux récipients de boissons dans la console centrale d'un véhicule à moteur

(30) Priorität: 19.08.1994 DE 4429515
(43) Veröffentlichungstag der Anmeldung: 21.02.1996
(73) Patentinhaber: fischerwerke Artur Fischer GmbH & Co. KG, D-72178 Waldachtal (DE); MERCEDES-BENZ AG, 70322 Stuttgart (DE)
(72) Erfinder: Plocher, Bernd, D-72108 Rottenburg-Seebronn (DE); Koukal, Heinz, D-71067 Sindelfingen (DE); Körber, Jürgen, D-71065 Sindelfingen (DE)

(56) Entgegenhaltungen:
- EP-A- 0 593 169
- DE-A- 4 022 193
- US-A- 5 060 899
- US-A- 5 259 580
- US-A- 5 284 314
- US-A- 5 330 146

## Beschreibung

Die Erfindung betrifft eine Vorrichtung gemäß dem Oberbegriff des Hauptanspruchs.

Eine derartige Vorrichtung ist z.B. aus US-A-5 060 899 bekannt.

Es sind eine Vielzahl von Vorrichtungen zum Halten von Behältnissen insbesondere in einem Kraftfahrzeug bekannt. Dabei steht das Behältnis auf einer Auflagefläche, die entweder fest oder herausklappbar angeordnet ist, und ein Haltering oder dergleichen fixiert das Behältnis seitlich.

Diese bekannten Vorrichtungen sind jedoch ungeeignet, um in einem Fach in der Mittelkonsole eines Kraftfahrzeuges, insbesondere eines Personenkraftfahrzeuges, untergebracht zu werden. Durch das zur Verfügung stehende geringe Platzangebot aufgrund des Schalthebels und gegebenenfalls einer Armlehne wird eine Vorrichtung benötigt, die in das Fach integrierbar ist.

Der vorliegenden Erfindung liegt daher das Problem zugrunde, eine Vorrichtung zum Halten von zwei Getränkebehältnissen vorzusehen, die im unbenutzten Zustand in das Fach versenkbar und für die Benutzung aus dem Fach nach oben herausbewegbar ist.

Dieses Problem wird mit einer Vorrichtung gemäß den Merkmalen des Hauptanspruchs gelöst.

Die Vorrichtung umfaßt ein Traggestell, das in einem Fach einer Konsole eines Kraftfahrzeugs einsetzbar ist, und an dem der Haltering und ein Halterahmen zur seitlichen Fixierung des zweiten Getränkebehälters aus einer in der Konsole versenkten Stellung in eine aus der Konsole herausragenden Haltestellung bewegbar gehalten sind. Der Haltering kann dabei zur Aufnahme eines Bechers und der Halterahmen zur Aufnahme einer Getränkedose dienen. Die Außenabmessungen des Traggestells entsprechen den Abmessungen des Fachs.

Die Vorrichtung umfaßt außerdem einen an einem Tragelement angebrachten zusammenklappbaren Haltering, der einen ersten und einen zweiten Haltebügel aufweist, die über ein vertikales Drehgelenk miteinander verbunden sind und im zusammengeklappten Zustand die Außenabmessungen des Traggestells nicht überschreiten bzw. im auseinandergeklappten Zustand seitlich oberhalb des Halterahmens angeordnet sind. Die beiden Haltebügel werden beim Zusammenklappen aufeinander zubewegt, so daß sie dicht aneinanderliegen. Das Auffächern kann mittels eines entsprechend angeordneten Federelements erfolgen, das die Haltebügel auseinanderbewegt, bis sie, durch einen Anschlag begrenzt, ihre Endstellung erreichen. Wesentlich ist, daß der zusammengeklappte Haltering die Außenabmessungen des Traggestells nicht überschreitet, damit der Haltering in die in der Konsole versenkte Stellung gelangen kann. Mit dem Haltering kann, sofern dies erforderlich ist, noch zusätzlich eine Auflage für das von dem Haltering seitlich fixierte Behältnis aus der versenkten Stellung in die Endstellung gebracht werden. Es ist jedoch auch möglich, die Haltebügel so auszugestalten, daß sie einen konischen Becher derart festhalten, daß ein Durchrutschen nicht möglich ist, oder daß der Becher auf der Konsole aufsteht.

Der Halterahmen mit dem zusammengeklappten Haltering ist aus der versenkten Stellung in eine aus der Konsole herausragende Stellung vertikal bewegbar, in der der Halterahmen bereits seine Endstellung eingenommen hat, die Aufnahmeöffnung des Halterahmens jedoch noch durch den Haltering abgedeckt wird. Anschließend ist der Haltering in die auseinandergeklappte Haltestellung seitlich oberhalb des Halterahmens bewegbar. Der gesamte Bewegungsvorgang kann auch selbsttätig elektrisch, pneumatisch oder mittels Federkräften bewirkt werden. Durch die Bewegung des Halterings von der Zwischenstellung in die Haltestellung wird die Aufnahmeöffnung des Halterahmens freigegeben, so daß dann zwei Möglichkeiten zum Abstellen von Getränkebehältnissen vorhanden sind, wobei das eine Getränkebehältnis von dem Halterahmen in dem Fach der Konsole fixiert wird, während das andere Getränkebehältnis seitlich des ersten Getränkebehältnisses und oberhalb der Konsole angeordnet ist.

Weitere vorteilhafte Ausgestaltungen sind den Unteransprüchen zu entnehmen.

Gemäß einer bevorzugten Ausführungsform weist die Vorrichtung eine Auflage für das von dem Haltering seitlich fixierten Behältnis auf, die zusammen mit dem Haltering aus der versenkten Stellung in die Zwischenstellung und anschließend in die Haltestellung unterhalb des Halterings bewegbar ist. Dadurch ist es für den Einsatz der Vorrichtung nicht erforderlich, daß die Konsole im Bereich des Halterings eben ausgestaltet ist, um als Auflage für das von dem Haltering seitlich fixierte Behältnis zu dienen, da gerade in diesem Bereich häufig wegen der Armlehne die Konsole eine Schräge aufweist.

Vorzugsweise erfolgt die Bewegung des Halterahmens mit zusammengeklapptem Haltering in seine Endstellung und die Bewegung des Halterings in seine Haltestellung selbsttätig. Eine gegebenenfalls vorgesehene Auflage folgt der Bewegung des Halterings ebenfalls selbsttätig. Diese Bewegung kann, wie bereits vorstehend erwähnt, pneumatisch, elektrisch oder mittels Federkräften durchgeführt werden, so daß der Fahrer für das Ausfahren aus dem Fach nicht abgelenkt wird.

Zur Handhabung und Bewegung des Halterings ist der Haltering an einem Tragelement angebracht, das als senkrechte am oberen Ende verschlossene Traghülse ausgebildet ist, die mittels Spurzapfen in äußeren Führungsrillen eines im Inneren der Traghülse angeordneten Dornes für die Bewegung von der Zwischenstellung bis zur Haltestellung geführt ist. Bei entsprechender Ausgestaltung der Führungsrillen bewegt sich der Haltering aus seiner Stellung über dem Traggestell in eine Stellung seitlich oberhalb des Traggestells und umgekehrt. Vorteilhafterweise erfolgt die selbsttätige Bewegung über eine Druckfeder, die im Inneren der Traghülse angeordnet ist und sich am Umfang des Dornes abstützt und bei der Entspannung die selbsttätige Bewegung des Halterings von der Zwischenstellung zur Haltestellung bewirkt. Bei dieser Ausgestaltung wird durch Druck auf das verschlossene Ende der Traghülse der Haltering wieder in seine versenkte und zusammengeklappte Stellung gebracht. Ebenfalls durch Druck auf das verschlossene Ende wird das Herausbewegen aus der versenkten Stellung in die Endstellung eingeleitet.

In einer weiteren Ausgestaltung ist die Auflage an einer die Traghülse umgreifenden Auflagehülse befestigt, die in einem am Umfang der Traghülse angeordneten Führungssteg geführt ist, so daß sich die Auflage durch die Bewegung der Traghülse in ihre Endstellung bewegt. Mittels dieser Anordnung kann die Auflage durch entsprechende Ausgestaltung des Führungsstegs aus der zusammengeklappten Stellung des Halterings so in die Endstellung bewegt werden, daß die Auflage konzentrisch zum Haltering positioniert werden kann.

In einer weiteren vorteilhaften Ausgestaltung ist zwischen Halterahmen und Traghülse eine Verriegelungseinrichtung vorgesehen, die in der Zwischenstellung erst die Traghülse für ihre Bewegung in die Haltestellung freigibt und anschließend den Halterahmen gegenüber dem Traggestell verriegelt, um den Halterahmen in der ausgefahrenen Stellung zu halten. Vorzugsweise umfaßt die Verriegelungseinrichtung einen am Traggestell schwenkbar gelagerten Steuerriegel, der einen ersten Steuerzapfen, der in einer Steuerkurve im Traggestell geführt ist, und einen zweiten Steuerzapfen, der der Traghülse zugewandt und in einer an deren Umfang angeordneten Steuerausnehmung geführt ist, aufweist. Dabei gibt der zweite Steuerzapfen durch die Führung des ersten Steuerzapfens im Traggestell die Traghülse für ihre Bewegung nach oben frei und bewegt bei der Aufwärtsbewegung der Traghülse den ersten Steuerzapfen in seine den Halterahmen verriegelnde Stellung. Diese Lösung bietet sich insbesondere dann an, wenn die gesamte Vorrichtung aus einzelnen Kunststoffspritzteilen aufgebaut wird, da es sich um einzelne einfach herzustellende Bauteile handelt.

Gemäß einer weiteren Ausgestaltung ist der Halterahmen in der versenkten Stellung über einen Führungszapfen, der in einer Herzkurve verläuft, verriegelt, und die Bewegung des Halterahmens erfolgt mittels einer am Traggestell befestigten Zugfeder. Dadurch sind keine besonderen elektrischen oder pneumatischen Vorrichtungen erforderlich und die gesamte Vorrichtung kann auch als einfaches Zubehörteil nachträglich in ein entsprechendes Fach einer Konsole integriert werden. Durch die Verriegelung des Halterahmens in der versenkten Stellung in einer Herzkurve (push-push-Verriegelung) wird der Halterahmen in einer dem Fachmann bekannten Art und Weise verriegelt. Durch Drücken auf das obere Ende der Traghülse wird der Halterahmen entriegelt und bewegt sich aufgrund der Federkraft in seine Endstellung. Dort wird durch den vorstehend beschriebenen Verriegelungsmechanismus der Weg der Traghülse nach oben freigegeben, die sich dann aufgrund der Führungsrillen zusammen mit der Auflage selbsttätig in die Endstellung bewegt. Zum Versenken des Halterings und des Halterahmens wird durch permanenten Druck auf das obere Ende der Traghülse der Haltering bis zur Zwischenstellung und dann zusammen mit dem Halterahmen in die versenkte Stellung bewegt und mittels des Führungszapfens in der Herzkurve am Traggestell verriegelt.

Der gesamte Aufbau und die Zusammenklappbewegung des Halterings wird in einer weiteren Ausgestaltung dadurch optimiert, daß der Haltering einen starr mit der Halterung verbundenen ersten Haltebügel und einen dazu beweglich angeordneten zweiten Haltebügel aufweist, der beim Zusammenklappen des Halterings mittels eines am Halterahmen angeordneten Anschlags in seine zusammengeklappte Stellung gebracht wird. Die Aufspreizung erfolgt mittels eines entsprechenden Federelements.

Die erfindungsgemäß ausgestaltete Vorrichtung gewährleistet somit eine Lösung für die Unterbringung von zwei Behältnissen, wobei die Vorrichtung selbst einfach und schnell in dem Fach einer Mittelkonsole versenkt werden kann. Die Vorrichtung selbst kann kostengünstig aus Kunststoffspritzteilen hergestellt werden.

Nachfolgend wird die Erfindung anhand eines Ausführungsbeispiels näher erläutert.

Es stellen dar:
- Figur 1: eine schematische Seitenansicht einer Mittelkonsole eines Pkws;
- Figur 2: die Draufsicht auf das Fach in der Mittelkonsole mit versenkter Vorrichtung;
- Figur 3: die Vorrichtung mit dem Haltering in der versenkten Stellung, der Zwischenstellung und der Haltestellung;
- Figur 4: eine perspektivische aufgebrochene Seitenansicht der Vorrichtung in der versenkten Stellung;
- Figur 5: eine perspektivische aufgebrochene Seitenansicht der Vorrichtung in der Zwischenstellung;
- Figur 6: eine perspektivische aufgebrochene Seitenansicht der Vorrichtung in der Endstellung und
- Figur 7: die einzelnen Stellungen der Verriegelungseinrichtungen für den Haltering.

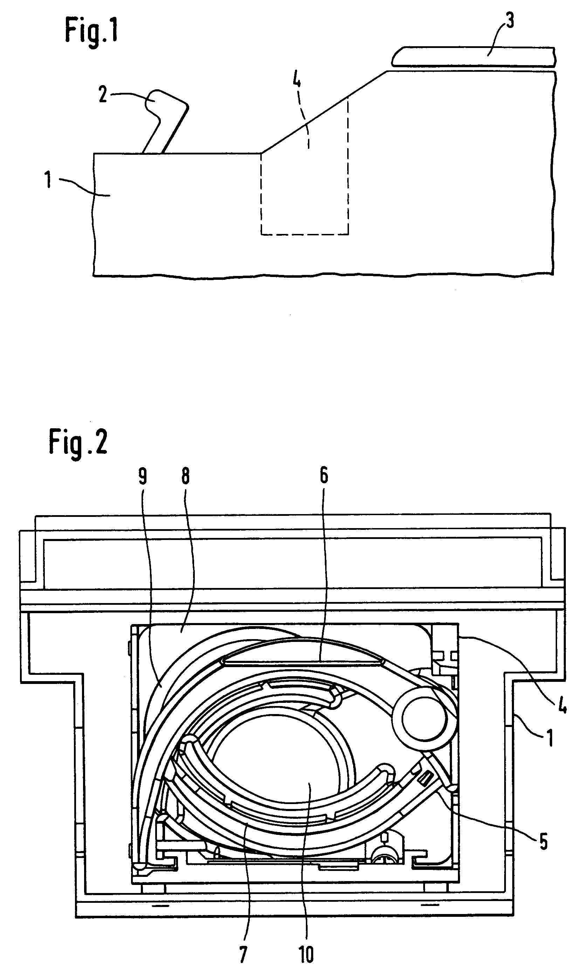

Figur 1 zeigt in schematischer Seitenansicht die Mittelkonsole 1 eines Personenkraftfahrzeugs mit dem Schalthebel 2, einer Armlehne 3 und dem dazwischenliegenden Fach 4 in dem die erfindungsgemäß ausgestaltete Vorrichtung integrierbar ist.

In Figur 2 ist eine schematische Draufsicht auf die in dem Fach 4 versenkte Vorrichtung 5 dargestellt. Die Vorrichtung 5 entspricht in ihren Außenabmessungen den Innenabmessungen des Fachs 4 und die Haltebügel 6 und 7 befinden sich zusammengeklappt und versenkt in dem Fach. In Figur 2 ist noch der Halterahmen 8 mit einer Ausnehmung 9 zur Aufnahme eines weiteren Getränkebehältnisses ersichtlich, die von den Haltebügeln 6 und 7 in der versenkten Stellung teilweise verdeckt ist. Eine zusätzliche Auflage 10 für das von den Haltebügeln 6 und 7 seitlich zu fixierende Behältnis kann außerdem noch in dem Fach versenkt werden.

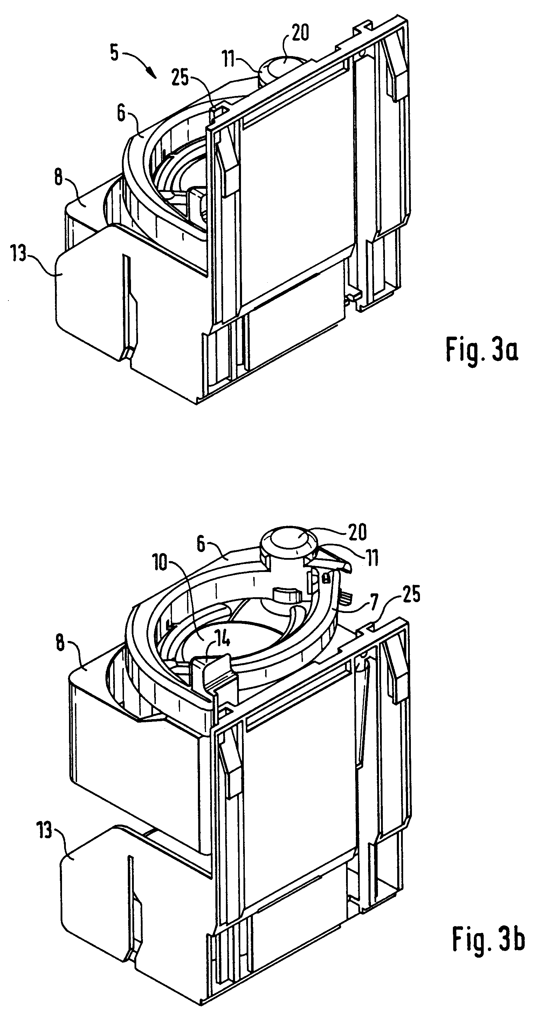

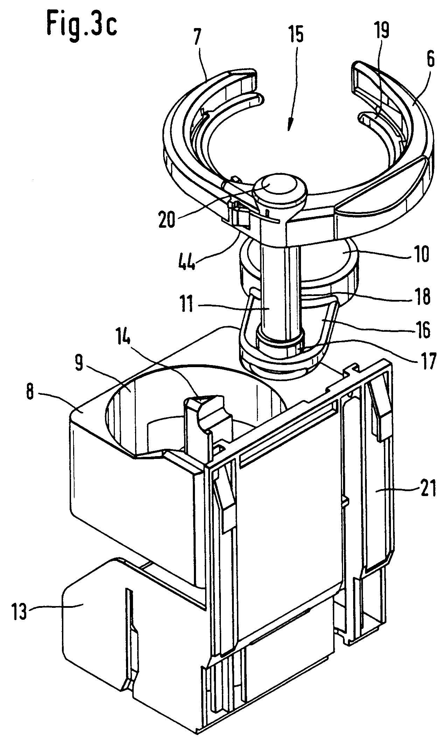

Aus Figur 3 sind die verschiedenen Stellungen der Haltebügel 6 und 7 sowie des Halterahmens 8 ersichtlich. Figur 3a zeigt die Vorrichtung 5 mit zusammengeklappten Haltebügeln 6 und 7 und zusammen mit dem Halterahmen 8 in der in dem Fach 4 versenkte Position, wie in Figur 2 schematisch in der Draufsicht dargestellt. Figur 3b zeigt die Zwischenstellung, in der der Halterahmen 8 zusammen mit den Haltebügeln 6 und 7 sowie der Auflage 10 angehoben ist. Die Haltebügel 6 und 7 sind noch zusammengeklappt. Wie aus der Figur 3b ersichtlich, sind die beiden Haltebügel 6 und 7 an einer Traghülse 11 angebracht, wobei der Haltebügel 6 starr und der Haltebügel 7 beweglich mit der Traghülse 11 verbunden ist. Die Traghülse 11 ist mit dem Halterahmen 8 verbunden, der in entsprechenden Führungsschienen 25 am Traggestell 13 für die vertikale Bewegung gehalten ist. In der Zwischenstellung befindet sich der Halterahmen 8 bereits in seiner Endstellung mit dem entsprechenden Abstand zum Boden des Faches um ein Getränkebehältnis aufnehmen zu können. Aus dieser Zwischenstellung bewegen sich die Haltebügel 6 und 7 sowie die Aufnahme 10 in die in Figur 3c dargestellte Endstellung seitlich oberhalb der Ausnehmung 9 des Halterahmens 8. Der über ein vertikales Drehgelenk an dem anderen Haltebügel 6 beweglich angelenkte Haltebügel 7 befindet sich in der ausgeklappten Stellung und bildet mit dem starren Haltebügel 6 einen Haltering 15 zum seitlichen Fixieren eines Getränkebehältnisses, beispielsweise eines Getränkebechers. Die Bewegung des Haltebügels 7 in die Haltestellung erfolgt mittels Federelementen 44. Das Behältnis steht auf der Auflage 10, die sich ebenfalls aus ihrer die Ausnehmung 9 verdeckenden Position in der Zwischenstellung in die Endstellung bewegt hat. Die Auflage 10 ist über einen Tragarm 16 und eine Auflagehülse 17, die die Traghülse 11 umgreift, an dieser befestigt. Durch entsprechende Ausgestaltung eines Führungsstegs 18 am Umfang der Traghülse 11 kann die Auflage 10 bei der Bewegung der Traghülse 11 nach oben in ihre konzentrische Position unterhalb des Halterings 15 gebracht werden. An den Haltebügeln 6 und 7 des Halterings 15 befinden sich Durchmesserausgleichsklappen 19 zur Verbesserung der seitlichen Halterung des Getränkebehältnisses bei verschiedenen Durchmessern. Mittels einer zusätzlichen, in den Figuren nicht ersichtlichen Rasteinrichtung, kann der bewegliche Haltebügel 7 bis zu einem Rastanschlag nach außen bewegt werden, um auch größere Getränkebehältnisse, wie beispielsweise eine Thermoskanne, seitlich halten zu können.

Die Traghülse 11 ist mit einem Druckstück 20 versehen und derart mit dem Halterahmen 8 und dem Traggestell 13 verbunden, daß durch kurzes Antippen des Druckstückes 20 der Halterahmen 8 zusammen mit der Traghülse 11 sich selbsttätig aus der Stellung in Figur 3a in die Stellung gemäß Figur 3b bewegt. Ohne weiteres Zutun verbleibt der Halterahmen 8 in seiner Endstellung und die Traghülse 11 bewegt sich zusammen mit der Auflage 10 in die Haltestellung gemäß Figur 3c mit auseinandergeklappten und einen Haltering 15 formenden Haltebügeln 6 und 7. Die selbsttätige Bewegung wird durch entsprechende Federelemente, die zwischen dem Halterahmen 8 und der Rückwand 21 des Traggestells 13 und im Inneren der Traghülse 11 angeordnet sind, bewirkt. Die Bewegung der Haltebügel 6 und 7 sowie des Halterahmens 8 wieder in die versenkte Stellung erfolgt durch Drücken auf das Druckstück 20 bis der Halterahmen 8 an dem Traggestell 13 in der versenkten Stellung einrastet. Die Verriegelung erfolgt mittels eines in einer Herzkurve geführten Führungszapfen.

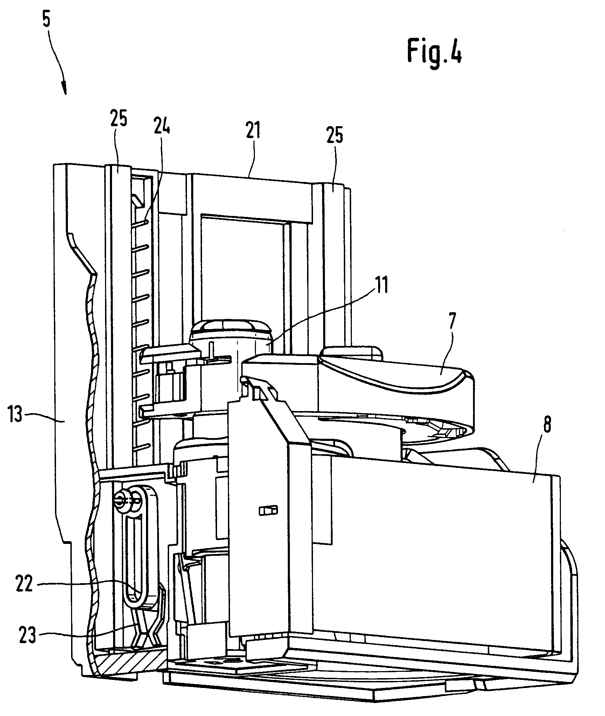

Figur 4 zeigt die einzelnen Elemente in der versenkten Stellung entsprechend Figur 3a. Aus dieser Figur ist die Verriegelung des Halterahmens 8 an dem Traggestell 13 mittels eines entsprechend gelagerten Führungszapfens 22 in der Herzkurve 23 ersichtlich. Durch diese, dem Fachmann bekannte Verriegelungseinrichtung, erfolgt die Entriegelung durch Druck auf das Druckstück 20, welcher über die Traghülse 11 auf den Halterahmen 8 übertragen wird, so daß sich der Halterahmen 8 durch die Kraft der Zugfeder 24 nach oben entlang der Führungsschienen 25 in die Stellung gemäß Figur 3b bewegt. Zur Erzielung einer gedämpften Bewegung können auch noch Dämpfungselemente zwischen dem Traggestell 13 und dem Halterahmen 8 vorgesehen sein.

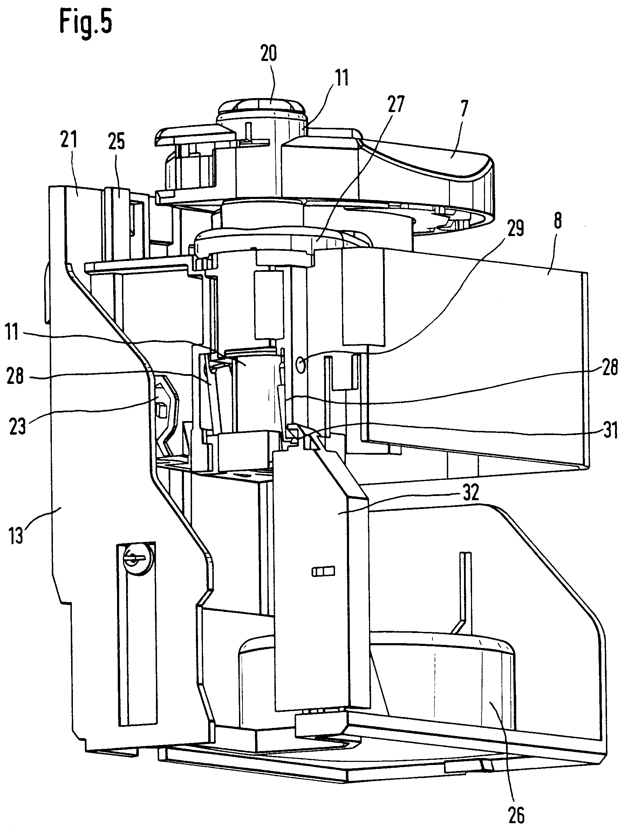

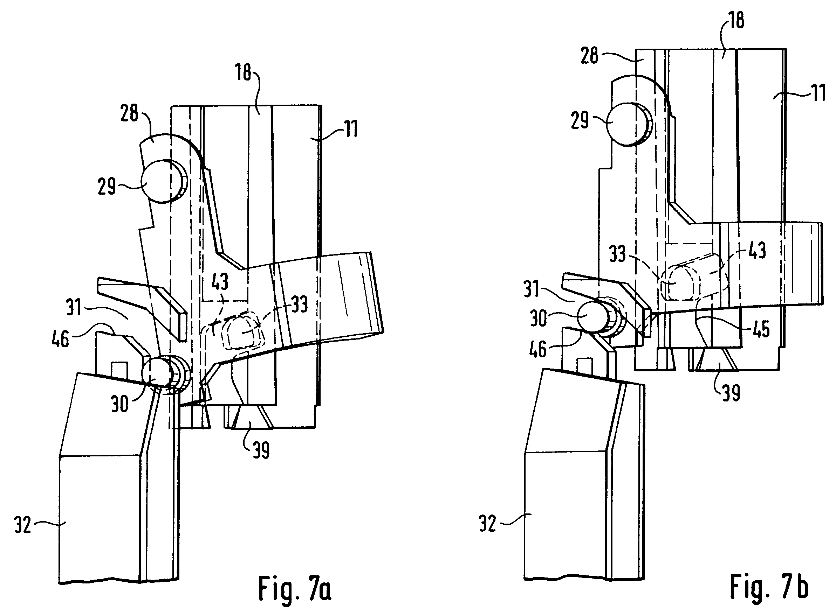

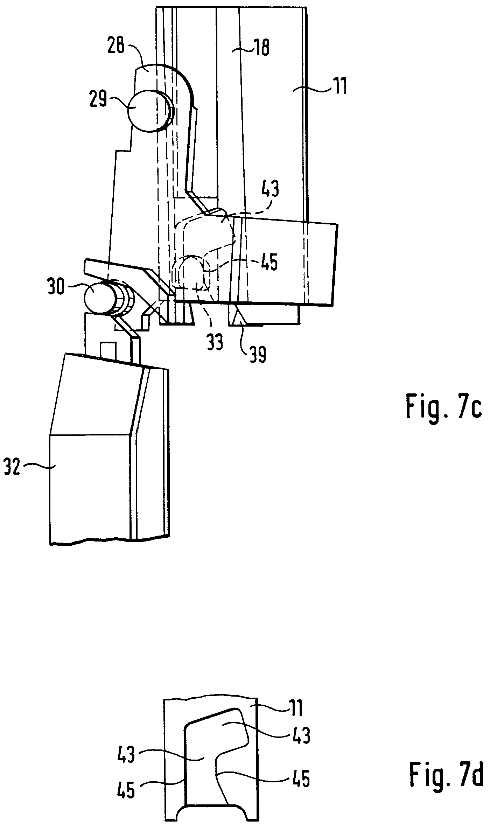

Die Zwischenstellung der Vorrichtung gemäß Figur 3b ist in Figur 5, in der teilweise auch die entsprechenden Verriegelungselemente ersichtlich sind, dargestellt. In der Zwischenstellung hat sich die Herzkurve 23, die an dem Halterahmen 8 befestigt ist, von den entsprechenden Führungszapfen am Traggestell 13 gelöst. Die zwischen der Rückwand 21 und dem Halterahmen 8 angeordnete Zugfeder 24 hat den Halterahmen 8 in seine Endstellung am Traggestell 13 bewegt. Durch die Bewegung hat der Halterahmen 8 eine Aufstandsfläche 26 am Boden des Traggestells 13 für das in dem Halterahmen 8 anzuordnende Getränkebehältnis freigegeben. Figur 5 zeigt die Auflagehülse 17, an der die Auflage 10 befestigt ist und die die Traghülse 11 umgreift. An dem Halterahmen 8 ist ein Steuerriegel 28 mittels Zapfen 29 schwenkbar gelagert. Der Steuerriegel 28 ist in diesem Ausführungsbeispiel halbkreisförmig ausgebildet und umhüllt die Traghülse 11 auf der Innenseite. An dem Steuerriegel 28 ist ein Steuerzapfen 30 befestigt, der in einer Steuerkurve 31 in dem Teil 32 des Traggestells 13 verläuft. Die Steuerkurve 31 ist dabei so ausgestaltet, daß durch den Steuerzapfen 30 und einen zweiten Steuerzapfen 33 (Figur 7) die Bewegung der Traghülse 11 nach oben und damit das Aufklappen des Halterings 15, wie nachfolgend noch in Verbindung mit Figur 7 näher erläutert, eingeleitet wird.

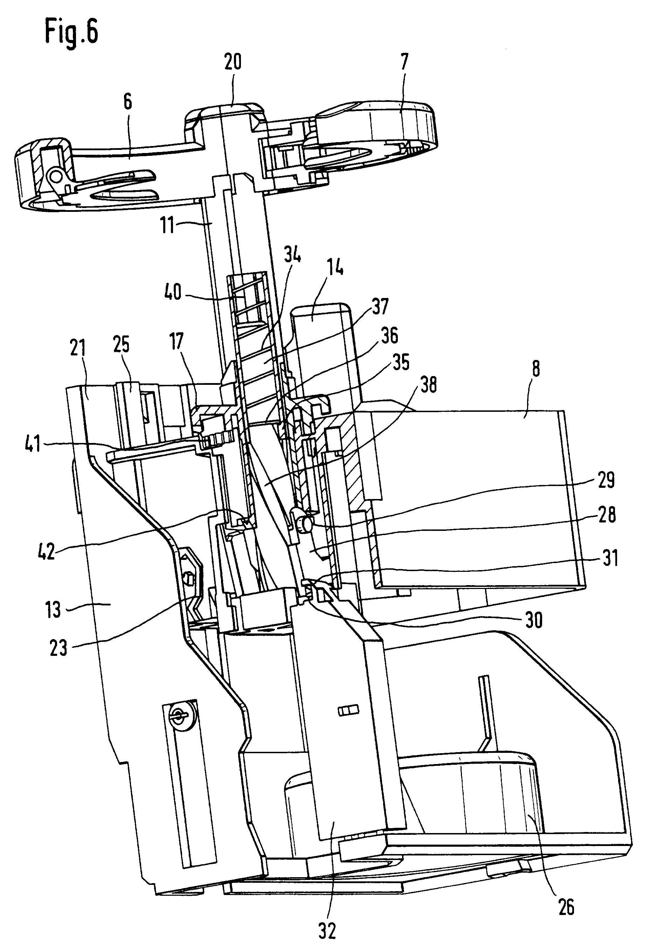

In Figur 6 ist der auseinandergeklappte Haltering 15 in seiner Endstellung zusammen mit den Durchmesserausgleichsklappen 19 ersichtlich. Durch den teilweisen Aufschnitt der Vorrichtung ist die Auflage 10 nicht ersichtlich. Figur 6 zeigt im Inneren der Traghülse 11 eine Druckfeder 34, die die selbsttätige Bewegung aus der Zwischenstellung in die Endstellung bewirkt. Die Druckfeder 34 stützt sich einerseits an dem Anschlag 35 im Inneren der Traghülse 11 ab und wird durch die Kante 36 des im Inneren der Traghülse 11 angeordneten Dornes 37 bei der Bewegung der Traghülse 11 in die Zwischenstellung zusammengepreßt. Der Dorn 37 ist mit dem Halterahmen 8 verbunden und weist an seinem Umfang Führungsrillen 38 auf, die über Spurzapfen 39 (Figur 7) die Drehbewegung der Traghülse 11 und damit des Halterings 15 aus der Stellung über der Ausnehmung 9 in die seitliche Haltestellung bewirkt. Die Führung des Druckstückes 20 im Inneren des Dornes 37 erfolgt über einen Sechskant-Stift 40 und einer entsprechenden Längsbohrung im Dorn 37. Die Drehbewegung der Traghülse 11 bis zum Anschlag 42 kann durch Dämpfungselemente 41 gebremst werden. Der Steuerzapfen 30 verriegelt in dieser Stellung den Halterahmen 8 an dem Teil 32, so daß der Halterahmen 8 in seiner erhöhten Stellung sicher gehalten wird.

Anhand der einzelnen Darstellungen in Figur 7 wird nachfolgend die Verriegelung bzw. Freigabe der einzelnen Elemente näher erläutert. Die Figuren 7a, 7b und 7c zeigen das Teil 32 mit der Steuerkurve 31, in der der Steuerzapfen 30 des Steuerriegels 28 geführt wird. Der Steuerriegel 28 ist, wie vorstehend beschrieben, mittels des Drehzapfens 29 an dem Halterahmen beweglich gelagert. An dem Steuerriegel 28 befindet sich der zweite Steuerzapfen 33, der auf der dem ersten Steuerzapfen 30 gegenüberliegenden Seite des Steuerriegels 28 angeordnet ist und in einer Steuerausnehmung 43 auf der Oberseite der Traghülse 11 geführt ist. Auf der Oberseite der Traghülse 11 ist in diesen Figuren noch ein Führungssteg 18 angeordnet, der eine zusätzliche Drehbewegung der Auflagehülse 27 gegenüber der Traghülse 11 bewirkt. Diese ist erforderlich, um die Auflage 10 in eine konzentrische Position zu dem Haltering 15 zu bringen bzw. beim Zusammenklappen des Halterings die Auflage 10 optimal zu positionieren. An dem unteren Ende der Traghülse 11 befindet sich die Spurzapfen 39, die in die Führungsrillen 38 des Dornes 37 in Figur 6 eingreifen.

Figur 7a zeigt den Steuerriegel 28 zusammen mit den Steuerzapfen 30 und 33 sowie der Traghülse 11 kurz vor Erreichen der Zwischenstellung. Bis dahin hat sich der Steuerzapfen 30 entlang der Steuerkurve 31 in vertikaler Richtung bewegt, und die Traghülse 11 ist über den Steuerzapfen 33 aufgrund der Form der Steuerausnehmung 43 gehindert, sich unabhängig von dem Halterahmen 8 zu bewegen. In dem Augenblick, in dem der Halterahmen das Ende seiner Aufwärtsbewegung und damit die Zwischenstellung erreicht, läuft der Steuerzapfen 30 in der Steuerkurve 31 in die in Figur 7b dargestellte Position. Damit wird der Steuerriegel 28 nach links bewegt, so daß der Steuerzapfen 33 sich in der Steuerausnehmung 43 ebenfalls nach links bewegt und damit die Traghülse 11 für eine Bewegung nach oben, bewirkt durch die Druckfeder 34, freigibt. Bei der Bewegung der Traghülse 11 nach oben drückt die Steuernase 45, wie in Figur 7c gezeigt, den Steuerzapfen 33 weiter nach links, so daß der Steuerzapfen 30 in der Steuerkurve 31 in den im wesentlichen waagrechten Bereich 46 der Steuerkurve 31 gelangt. Damit ist dann der Halterahmen 8 über den Steuerriegel und den Drehzapfen 29 für eine Bewegung nach unten verriegelt. Die Bewegung des Steuerzapfens 33 zur Verriegelung des Halterahmens wird noch durch die bereits eingeleitete Drehbewegung der Traghülse 11 aufgrund der in den Führungsrillen 38 geführten Spurzapfen 39 verstärkt. Dies ist aus Figur 7c aufgrund der anderen Perspektive der Spurzapfen 39 und dem vergrößerten Abstand des unteren Endes der Traghülse 11 und dem Teil 32 ersichtlich.

In Figur 7d ist die Steuerausnehmung 43 auf der Oberseite der Traghülse 11 noch einmal allein dargestellt. Bei der Abwärtsbewegung der Traghülse 11 bewirkt die Kante 47 zusammen mit der Drehbewegung der Traghülse 11 aufgrund der Führungsrillen 38, daß über den Steuerzapfen 33 der Steuerzapfen 30 aus dem waagrechten Bereich 46 der Steuerkurve 31 herausbewegt wird und damit der Halterahmen für eine Bewegung nach unten freigegeben wird. Durch weiteren Druck auf die Stirnseite 20 der Traghülse 11 gelangt der Steuerzapfen 33 in den Bereich 48 der Steuerausnehmung 43, wodurch die Traghülse 11 mit dem Halterahmen verriegelt und durch den Druck auf die Traghülse 11 nach unten in die versenkte Stellung bewegt wird.

Die einzelnen Elemente der Vorrichtung sind aus Kunststoff-Spritzgußteilen hergestellt, was eine kostengünstige Herstellung der Vorrichtung erlaubt.

## Patentansprüche

1. Vorrichtung zum Halten von zwei Getränkebehältnissen mit einem Haltering (15) zum seitlichen Fixieren eines Getränkebehältnisses, mit
einem Traggestell (13), das in einem Fach (4) einer Konsole (1) eines Kraftwagens einsetzbar ist, und an dem der Haltering (15) und ein Halterahmen (8) zur seitlichen Fixierung des zweiten Getränkebehältnisses aus einer in der Konsole versenkten Stellung in eine aus der Konsole herausragenden Haltestellung bewegbar gehalten sind,
**gekennzeichnet durch**
den an einem Tragelement (11) angebrachten zusammenklappbaren Haltering (15), der einen ersten und einen zweiten Haltebügel (6, 7) aufweist, die über ein vertikales Drehgelenk miteinander verbunden sind und im zusammengeklappten Zustand die Außenabmessungen des Traggestells (13) nicht überschreiten und im auseinandergeklappten Zustand seitlich oberhalb des Halterahmens (8) angeordnet sind,
und den Halterahmen (8), der mit zusammengeklapptem Haltering (15) aus der versenkten Stellung in seine aus der Konsole herausragenden Endstellung bewegbar ist, in der die Aufnahmeöffnung (9) des Halterahmens (8) zunächst noch durch die in einer Zwischenstellung befindlichen Haltebügel (6, 7) des Halterings (15) abgedeckt ist, und anschließend der Haltering in die auseinandergeklappte Haltestellung seitlich oberhalb des Halterahmens (8) aufgefächert ist.

2. Vorrichtung nach Anspruch 1, **gekennzeichnet durch** eine Auflage (10) für das von dem Haltering (15) seitlich fixierte Behältnis, die zusammen mit dem Haltering (15) aus der versenkten Stellung in die Zwischenstellung und anschließend in die Haltestellung unterhalb des Halterings (15) bewegbar ist.

3. Vorrichtung nach Anspruch 1, **dadurch gekennzeichnet,** daß die Bewegung des Halterahmens (8) mit zusammengeklapptem Haltering (15) in seine Endstellung und die anschließende Bewegung des Halterings (15) in seine Haltestellung selbsttätig erfolgt.

4. Vorrichtung nach Anspruch 1, **dadurch gekennzeichnet,** daß das Tragelement für den Haltering (15) als eine senkrecht angeordnete am oberen Ende verschlossene Traghülse (11) ausgebildet ist, die mittels Spurzapfen (39) in äußeren Führungsrillen (38) eines im Inneren der Traghülse (11) angeordneten Dornes (37) für die Bewegung von der Zwischenstellung bis zur Haltestellung geführt ist.

5. Vorrichtung nach Anspruch 2 und 4, **dadurch gekennzeichnet,** daß die Auflage (10) mittels einer die Traghülse (11) umgreifenden Auflagehülse (17) befestigt ist und am Umfang der Traghülse (11) ein Führungssteg (18) angeordnet ist, so daß sich die Auflage (10) durch die Bewegung der Traghülse (11) in ihre Endstellung bewegt.

6. Vorrichtung nach Anspruch 4, **dadurch gekennzeichnet,** daß im Inneren der Traghülse (11) eine Druckfeder (34) angeordnet ist, die sich am Umfang des Dornes (37) abstützt und bei der Entspannung die selbsttätige Bewegung des Halterings (15) von der Zwischenstellung zur Haltestellung bewirkt.

7. Vorrichtung nach Anspruch 4, **dadurch gekennzeichnet,** daß zwischen Traggestell (13) und Traghülse (11) eine Verriegelungseinrichtung (28) vorgesehen ist, die in der Zwischenstellung zuerst die Traghülse (11) für ihre Bewegung in die Haltestellung freigibt und anschließend den Halterahmen (8) gegenüber dem Traggestell (13) verriegelt, um den Halterahmen in der ausgefahrenen Stellung zu halten.

8. Vorrichtung nach Anspruch 7, **dadurch gekennzeichnet,** daß die Verriegelungseinrichtung einen am Halterahmen (8) schwenkbar gelagerten Steuerriegel (28) umfaßt, der einen ersten Steuerzapfen (30), der in einer Steuerkurve (31) im Traggestell (13, 32) geführt ist, und einen zweiten Steuerzapfen (33), der der Traghülse (11) zugewandt und in einer an deren Umfang angeordneten Steuerausnehmung (43) geführt ist, aufweist, wobei durch die Führung des ersten Steuerzapfens (30) im Traggestell der zweite Steuerzapfen (33) die Traghülse (11) für ihre Bewegung nach oben freigibt und der zweite Steuerzapfen bei der Aufwärtsbewegung der Traghülse (11) den ersten Steuerzapfen (30) in seine den Halterahmen (8) verriegelnde Stellung bewegt.

9. Vorrichtung nach Anspruch 1, **dadurch gekennzeichnet,** daß der Halterahmen (8) in der versenkten Stellung über einen Führungszapfen (22), der in einer Herzkurve (23) verläuft, verriegelt ist, und die Bewegung des Halterahmens (8) bis zu seiner Endstellung mittels einer am Traggestell (13) befestigten Zugfeder (24) erfolgt.

10. Vorrichtung nach Anspruch 1, **dadurch gekennzeichnet,** daß der Haltering (15) einen starr mit der Traghülse (11) verbundenen Haltebügel (6) und einen dazu beweglich angeordneten Haltebügel (7) aufweist, der beim Zusammenklappen des Halterings (15) mittels eines am Halterahmen (8) angeordneten Anschlags (14) in seine zusammengeklappte Stellung gebracht wird.

## Claims

1. A device for holding two drink containers, having a holding ring (15) for lateral fixing of a drink container, having
a supporting structure (13) which is insertable into a compartment (4) of a console (1) of a motor vehicle, and on which the holding ring (15) and a holding frame (8) for lateral fixing of the second drink container are held so that they are movable from a position recessed in the console into a holding position projecting from the console,
characterized by
the fold-together holding ring (15) mounted on a carrier element (11) and comprising a first and a second holding arm (6, 7) which are joined to one another by way of a vertical hinge and in the folded-together state do not exceed the external dimensions of the supporting structure (13) and in the opened-out state are arranged beside and above the holding frame (8),
and the holding frame (8), which with the folded-together holding ring (15) is movable from the recessed position into its end position projecting from the console, in which the receiving opening (9) of the holding frame (8) is initially still masked by the holding arms (6, 7) of the holding ring (15) still in an intermediate position, and subsequently the holding ring is opened out into the opened-out holding position beside and above the holding frame (8).

2. A device according to claim 1, characterized by a support (10) for the container laterally fixed by the holding ring (15), which support, together with the holding ring (15), is movable from the recessed position into the intermediate position and subsequently into the holding position beneath the holding ring (15).

3. A device according to claim 1, characterized in that the movement of the holding frame (8) with the folded-together holding ring (15) into its end position and the subsequent movement of the holding ring (15) into its holding position is effected automatically.

4. A device according to claim 1, characterized in that the carrier element for the holding ring (15) is in the form of a vertically arranged carrier sleeve (11) closed at the top end, which is guided by means of tracking pins (39) in external guide grooves (38) of a rod (37) arranged inside the carrier sleeve (11) for the movement from the intermediate position as far as the holding position.

5. A device according to claim 2 and 4, characterized in that the support (10) is secured by means of a bearing sleeve (17) engaging around the carrier sleeve (11) and on the circumference of the carrier sleeve (11) there is arranged a guide member (18) so that the support (10) moves into its end position by the movement of the carrier sleeve (11).

6. A device according to claim 4, characterized in that inside the carrier sleeve (11) there is arranged a compression spring (34) which bears against the circumference of the rod (37) and on decompression effects the automatic movement of the holding ring (15) from the intermediate position to the holding position.

7. A device according to claim 4, characterized in that between the supporting structure (13) and the carrier sleeve (11) there is provided a locking mechanism (28) which in the intermediate position first of all releases the carrier sleeve (11) for its movement into the holding position and subsequently locks the holding frame (8) with respect to the supporting structure (13) in order to hold the holding frame in its extended position.

8. A device according to claim 7, characterized in that the locking mechanism comprises a control locking member (28) pivotally mounted on the holding frame (8), which control locking member has a first control pin (30) which is guided in a control curve (31) in the supporting structure (13, 32), and a second control pin (33) which faces the carrier sleeve (11) and is guided in a control recess (43) arranged at the circumference of the carrier sleeve, wherein, by guiding the first control pin (30) in the supporting structure, the second control pin (33) releases the carrier sleeve (11) for its upward movement, and on upward movement of the carrier sleeve (11) the second control pin moves the first control pin (30) into its position locking the holding frame (8).

9. A device according to claim 1, characterized in that the holding frame (8) is locked in the recessed position by way of a guide pin (22) which runs in a cardioid curve (23), and the movement of the holding frame (8) as far as its end position is effected by means of a tension spring (24) secured to the supporting structure (13).

10. A device according to claim 1, characterized in that the holding ring (15) has a holding arm (6) rigidly joined to the carrier sleeve (11) and a holding arm (7) arranged movably with respect to the holding arm (6), which arm (7) is brought by means of a stop member (14) mounted on the holding frame (8) into its folded-together position as the holding ring is folded together.

## Revendications

1. Dispositif pour maintenir deux récipients à boisson avec une bague de maintien (15) pour fixer latéralement un récipient à boisson, comportant
un bâti porteur (3) qui peut s'insérer dans un compartiment (4) d'une console (1) d'un véhicule à moteur et sur lequel sont maintenus la bague de maintien (15) et un cadre de maintien (8) pour fixer latéralement le second récipient à boisson, avec possibilité de passer, d'une position enfoncée dans la console, dans une position de maintien sortant hors de la console,
caractérisé
par la bague de maintien (15), rapportée sur un élément porteur (11) et repliable, qui présente un premier et un second arcs de maintien (6, 7) qui sont reliés l'un à l'autre par l'intermédiaire d'une articulation tournante verticale et qui, à l'état replié, ne dépassent pas les dimensions extérieures du bâti porteur (13) et, à l'état déplié, sont disposés latéralement au-dessus du cadre de maintien (8),
et par le cadre de maintien (8), qui, la bague de maintien (15) étant repliée, peut se déplacer pour passer de la position enfoncée, à sa position finale, sortant hors de la console, dans laquelle l'ouverture de réception (9) du cadre de maintien (8) est tout d'abord encore recouverte par les arcs de maintien (6, 7) de la bague de maintien (15) qui se trouvent dans une position intermédiaire, et dans laquelle ensuite la bague de maintien se déploie dans la position de maintien, dépliée, latéralement au-dessus du cadre de maintien (8).

2. Dispositif selon la revendication 1, caractérisé par une surface de repos (10) pour le récipient fixé latéralement par la bague de maintien (15), surface de repos qui, avec la bague de maintien (15), peut se déplacer pour passer, de la position enfoncée, à la position intermédiaire et ensuite à la position de maintien en dessous de la bague de maintien (15).

3. Dispositif selon la revendication 1, caractérisé par le fait que le déplacement du cadre de maintien (8), avec la bague de maintien (15) repliée, pour venir dans sa position finale, et le mouvement, qui vient à la suite, de la bague de maintien (15) pour venir dans sa position de maintien se font automatiquement.

4. Dispositif selon la revendication 1, caractérisé par le fait que l'élément porteur pour la bague de maintien (15) est conçu sous forme d'un fourreau porteur (11) qui est disposé verticalement, qui est fermé à son extrémité supérieure, et qui, pour le déplacement pour passer de la position intermédiaire à la position de maintien, est guidé, au moyen de tenons de guidage (39), dans des rainures de guidage extérieures (38) d'un mandrin (37) disposé à l'intérieur du fourreau porteur (11).

5. Dispositif selon les revendications 2 et 4, caractérisé par le fait que la surface de repos (10) est fixée au moyen d'un manchon de repos (17) enserrant le manchon porteur (30) et qu'à la périphérie du manchon porteur (11) est disposé un ergot de guidage (18) de façon que la surface de repos (10) soit amenée dans sa position finale par le mouvement du manchon porteur (11).

6. Dispositif selon la revendication 4, caractérisé par le fait qu'à l'intérieur du manchon porteur (11) est disposé un ressort de compression (34) qui s'appuie contre la périphérie du mandrin (37) et qui, en se détendant, opère le déplacement automatique de la bague de maintien (15) pour passer de la position intermédiaire à la position de maintien.

7. Dispositif selon la revendication 4, caractérisé par le fait qu'entre le bâti porteur (13) et la manchon porteur (11) est prévu un mécanisme de verrouillage (28) qui, dans la position intermédiaire, libère d'abord le manchon porteur (11) pour son déplacement pour venir dans la position de maintien, puis verrouille le cadre de maintien (8) par rapport au bâti porteur (13) pour maintenir le cadre de maintien dans la position en extension.

8. Dispositif selon la revendication 7, caractérisé par le fait que le mécanisme de verrouillage comporte un verrou de commande (28) qui est porté, avec liberté de pivotement, sur le cadre de maintien (8) et qui présente un premier téton de commande (30) qui est orienté vers le manchon porteur (11) et est guidé dans un évidement de commande (43) disposé à sa périphérie, ce par quoi, par suite du guidage du premier téton de commande (30) dans le bâti porteur, le second téton de commande (33) libère le manchon porteur (11) pour son déplacement vers le haut et, lors du déplacement, vers le haut, du manchon porteur (11), le second téton de commande (11) déplace le premier téton de commande (30) pour l'amener dans sa position verrouillant le cadre de maintien (8).

9. Dispositif selon la revendication 1, caractérisé par le lait que, dans la position enfoncée, le cadre de maintien (8) est verrouillé par un téton de guidage (22) qui parcourt une courbe en coeur (23) et que le déplacement du cadre de maintien (8) jusqu'à sa position finale se fait au moyen d'un ressort de traction (24) fixé au bâti porteur (13).

10. Dispositif selon la revendication 1, caractérisé par le fait que la bague de maintien (15) présente un arc de maintien (6) rigidement relié au manchon porteur (11) et un arc de maintien (7) qui est disposé mobile par rapport à lui et qui, lors du repliement de la bague de maintien (15), est amené dans sa position repliée au moyen d'une butée (14) disposée sur le cadre de maintien (8).
